(19) Europäisches Patentamt
European Patent Office
Office européen des brevets

(11) EP 3 702 428 A1

(12) **EUROPEAN PATENT APPLICATION**
published in accordance with Art. 153(4) EPC

(43) Date of publication:
**02.09.2020 Bulletin 2020/36**

(21) Application number: **18870207.0**

(22) Date of filing: **08.05.2018**

(51) Int Cl.:
*C09J 175/06* (2006.01) *C08G 18/10* (2006.01)
*C08G 18/40* (2006.01) *C08G 18/42* (2006.01)
*C09C 3/12* (2006.01) *C09J 11/04* (2006.01)
*C09J 175/08* (2006.01)

(86) International application number:
**PCT/JP2018/017744**

(87) International publication number:
**WO 2019/082423 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2017 JP 2017207009**

(71) Applicant: **Horizon Inc.**
**Takashima-shi,**
**Shiga 520-1501 (JP)**

(72) Inventors:
- **KINOSHITA Norihiko**
**Takashima-shi**
**Shiga 520-1501 (JP)**
- **KOBAYASHI Kenji**
**Takashima-shi**
**Shiga 520-1501 (JP)**

(74) Representative: **Heinemann, Monica et al**
**Abitz & Partner**
**Patentanwälte mbB**
**Arabellastraße 17**
**81925 München (DE)**

(54) **MOISTURE-CURABLE POLYURETHANE HOT-MELT ADHESIVE AND PRODUCTION METHOD THEREFOR**

(57) Provided is a moisture-curable polyurethane hot-melt adhesive (PUR) that, when heated, produces less hazardous isocyanate gas, and is safe and easy for a user to handle.

This moisture-curable polyurethane hot-melt adhesive comprises 100 parts by weight of a urethane pre-polymer which is a product obtained from a reaction between an excessive amount of diphenylmethane diisocyanate and a mixture of a crystalline polyester polyol and a non-crystalline polyester polyol and/or a non-crystalline polyether polyol, and 5-20 parts by weight of a surface-modified silica gel containing an amino group. Preferable as the surface-modified silica gel is a silica gel to which a residual group of a silane oligomer, which is a hydrolytic product of aminoalkyl(di or tri)alkoxysilane, is linked.

EP 3 702 428 A1

## Description

TECHNICAL FIELD

The present invention relates to a moisture-curable polyurethane hot-melt adhesive (Polyurethane Reactive Hot Melt Adhesive, hereafter referred to as "PUR"), and in particular to a PUR suitable for bookbinding. Also, the present invention relates to a method for producing the PUR.

BACKGROUND ART

A hot-melt adhesive is used, for example, as an adhesive for perfect bookbinding, and an ethylene vinyl acetate copolymer (EVA) hot melt is often used for this purpose. However, problems are pointed out on the EVA hot melt, such as generation of poor adhesion due to increase in color printing in recent years or change in paper quality brought about by reproduction of old paper, and adverse effects on the environment due to difficulty of separation at the time of old paper reproduction.

Accordingly, in recent years, a PUR is attracting people's attention, such as disclosed in the following Patent Document 1, as an adhesive that substitutes for this EVA hot melt. This PUR reacts with moisture that is present in air or substrate (paper or the like), whereby the polymer is three-dimensionally cross-linked by a reaction mechanism shown in the following [Formula 1], resulting in a strong adhesive force.

[Chemical formula 1]

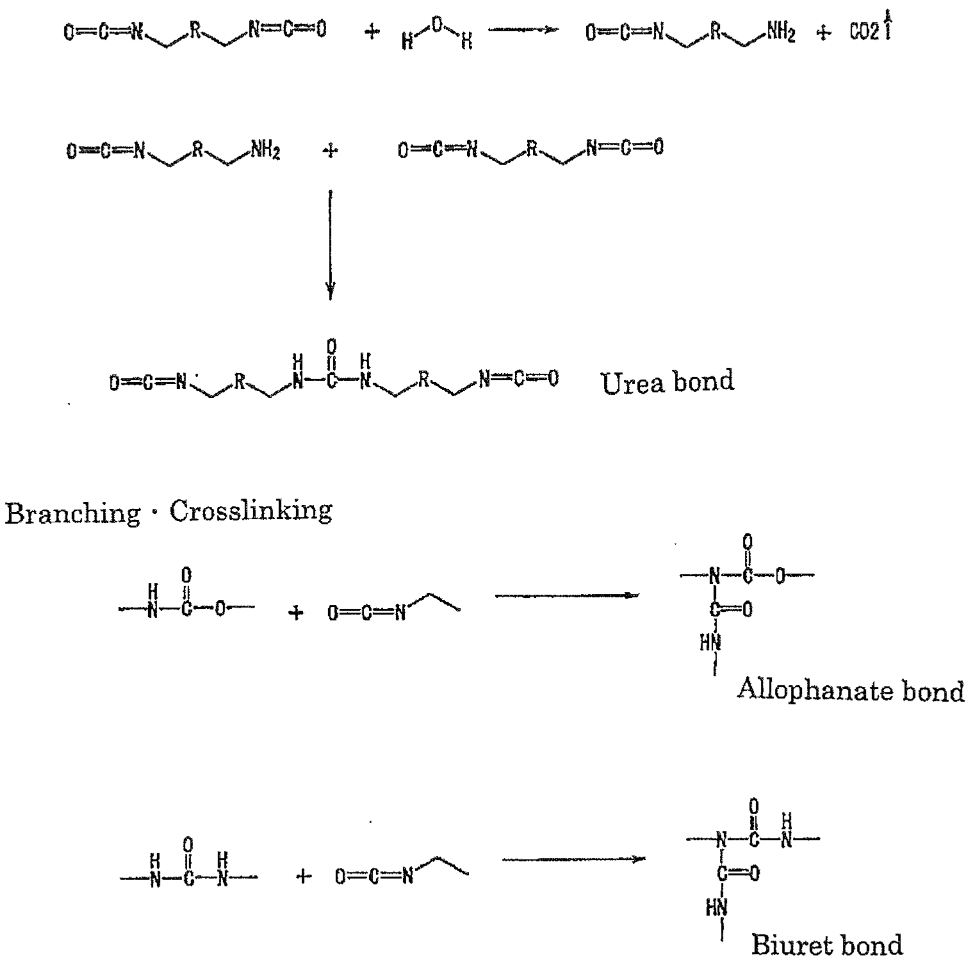


Also, when a soft PUR is designed and applied as a hot melt for bookbinding, a bound book having a good spreading property is obtained, and it is a characteristic feature of the PUR having a high adhesive force that such a spreading property is obtained. Further, the PUR has an advantage in that, in recycling books, separation between the hot melt and paper is easy, thereby facilitating the recycling.

On the other hand, since PUR is of a reaction type, the PUR needs to be in a pre-polymer form having a reactive terminal (NCO group), and it is necessary to blend an excessive amount of isocyanate monomers in synthesizing urethane. However, excessively blended monomers remain to some extent in the polymer, thereby raising a problem in that the remaining isocyanate monomers are emitted as a hazardous gas when the PUR is heated in an application apparatus.

For this reason, as safety measures against the emission of hazardous gas, a local gas exhaustion apparatus is currently disposed in almost all of the bookbinding machines (application apparatus of release type) when the PUR is used; however, this invites increase in the scale of the apparatus and rise in the costs. Also, in recent years, bookbinding machines are reduced in scale, and use thereof in offices is increasing; however, it is difficult to dispose a local gas exhaustion apparatus in offices.

When the emission of hazardous gas can be reduced in the PUR, simplification of the equipment and cost reduction can be achieved, and also the work can be carried out safely. According to Japan Society for Occupational Health, it is advised that a permissible concentration of diphenylmethane diisocyanate, which is a kind of diisocyanate used for urethane synthesis, is 0.05 $mg/m^3$ ≒ 5 ppb, and it is advised in the United States that the permissible concentration is 5 ppb by American Conference of Governmental Industrial Hygienists (ACGIH).

PRIOR ART DOCUMENTS

PATENT DOCUMENTS

Patent Document 1: JP-A-2016-121214

NON-PATENT DOCUMENT

Non-Patent Document 1: SANUKI Sumiko, MOTOYOSHI Fumitake, NAGAOKA Shigeru, MAJIMA Hiroshi, The Journal of the Surface Finishing Society of Japan, 50, (1), 84(1999)

SUMMARY OF THE INVENTION

PROBLEMS TO BE SOLVED BY THE INVENTION

An object of the present invention is to solve the aforementioned problems of the prior art and to provide a PUR that reduces emission of hazardous isocyanate gas when the PUR is heated and is safe and easy for a user to handle without deteriorating the softness, which is a characteristic feature of PUR, or solidification property after application. Also, an object of the present invention is to provide a method for producing PUR having the aforementioned characteristics.

As a result of various studies, the inventors have found out that a PUR with extremely slight emission of isocyanate gas can be obtained when a specific amount of surface-modified silica gel containing an amino group is added to a urethane pre-polymer obtained from a reaction between an excessive amount of diphenylmethane diisocyanate and a mixture containing a crystalline polyester polyol and a non-crystalline polyester polyol and/or a non-crystalline polyether polyol, thereby completing the present invention.

MEANS FOR SOLVING THE PROBLEMS

In the PUR of the present invention capable of solving the aforementioned problems, 5 to 20 parts by weight of a surface-modified silica gel containing an amino group is added to 100 parts by weight of a urethane pre-polymer which is a product obtained from a reaction between an excessive amount of diphenylmethane diisocyanate and a mixture containing a crystalline polyester polyol and a non-crystalline polyester polyol and/or a non-crystalline polyether polyol.

Also, the present invention is directed to a PUR having the aforementioned characteristic features, wherein the surface-modified silica gel is a silica gel to which a residual group of a silane oligomer, which is a hydrolytic product of aminoalkyl(di or tri)alkoxysilane, is bonded.

Also, the present invention is directed to a PUR having the aforementioned characteristic features, wherein the aminoalkyl(di or tri)alkoxysilane is selected from the group consisting of N-(2-aminoethyl)-3-aminopropyltrimethoxysilane, N-2-(aminoethyl)-3-aminopropylmethyldimethoxysilane, 3-aminopropyltrimethoxysilane, and 3-aminopropyltriethoxysilane.

Further, the present invention is directed to a PUR having the aforementioned characteristic features, wherein the crystalline polyester polyol is selected from the group consisting of polyester polyol of dodecanedioic acid/ethylene

glycol, polyester polyol of dodecanedioic acid/hexanediol, polyester polyol of sebacic acid/hexanediol, polyester polyol of adipic acid/hexanediol, and polycaprolactone; the non-crystalline polyester polyol is selected from the group consisting of polyester polyol of adipic acid/propylene glycol, polyester polyol of sebacic acid/isophthalic acid/hexanediol/neopentyl glycol, polyester polyol of phthalic acid/neopentyl glycol, polyester polyol of adipic acid/hexanediol/neopentyl glycol, polyester polyol of sebacic acid/propylene glycol, polyester polyol of adipic acid/isophthalic acid/terephthalic acid/neopentyl glycol/ethylene glycol, polyester polyol of isophthalic acid/ethylene glycol/neopentyl glycol/hexanediol/propylene glycol, polyester polyol of adipic acid/ethylene glycol/neopentyl glycol/hexanediol, and polyester polyol of adipic acid/isophthalic acid/hexanediol; and the non-crystalline polyether polyol is polypropylene glycol and/or polytetramethylene ether glycol.

The present invention is also directed to a method for producing the aforementioned PUR, where the production method includes the following steps A to C:

a step A of adding, to a mixture, diphenylmethane diisocyanate in an amount such that an isocyanate group is excessive relative to a hydroxyl group that is present in the mixture, the mixture containing a crystalline polyester polyol and a non-crystalline polyester polyol and/or a non-crystalline polyether polyol, and allowing a resultant to react in an inert gas atmosphere, so as to prepare a urethane pre-polymer;
a step B of preparing aminoalkyl(di or tri)alkoxysilane, hydrolyzing the aminoalkyl(di or tri)alkoxysilane to generate a silane oligomer, and thereafter allowing the silane oligomer to react with a silica gel, so as to prepare an amino-group-containing surface-modified silica gel in which a residual group of the silane oligomer is bonded to a surface of the silica gel; and
a step C of adding 5 to 20 parts by weight of the amino-group-containing surface-modified silica gel obtained in the step B to 100 parts by weight of the urethane pre-polymer obtained in the step A and allowing a resultant to react in an inert gas atmosphere.

The present invention is also directed to a production method having the aforementioned characteristic features, wherein a molar ratio of the isocyanate group and the hydroxyl group in the step A is NCO/OH = 1.4 to 1.7.

## EFFECT OF THE INVENTION

The PUR of the present invention results in an extremely small amount of emission of hazardous isocyanate gas as compared with a conventional commercially available PUR. Accordingly, when the PUR of the present invention is used, there is no need for a large-scale gas exhaustion apparatus, and also the costs for introducing the equipment can be reduced.

Also, since the PUR of the present invention results in an extremely small amount of emission of hazardous gas and is a safe PUR, the PUR of the present invention can be used for adhesion purposes in various fields and in particular, for use as a hot-melt adhesive for bookbinding, the PUR is excellent in spreading property, solidification property, and bookbinding strength.

## BRIEF DESCRIPTION OF THE DRAWINGS

Fig. 1 is a graph showing a relationship between the ratio of addition of a silane coupling agent relative to the theoretical optimal addition amount and the NCO group adsorption performance of an amino-group-containing surface-modified silica gel.

## MODE FOR CARRYING OUT THE INVENTION

Hereinafter, description is given by raising a hot-melt adhesive for bookbinding as an example; however, the PUR of the present invention is not limited to one for bookbinding.

First, the constituent components of the urethane pre-polymer in the PUR of the present invention will be described.

Specific examples of preferable crystalline polyester polyols constituting the aforementioned urethane pre-polymer include polyester polyol of dodecanedioic acid/ethylene glycol (for example, ETERNACOLL 3040 manufactured by Ube Industries, Ltd., molecular weight of 3500), polyester polyol of dodecanedioic acid/hexanediol (for example, ETERNACOLL 3010 manufactured by Ube Industries, Ltd., molecular weight of 3500), polyester polyol of sebacic acid/hexanediol (for example, HS 2H-350S with molecular weight of 3500 and HS 2H-200S with molecular weight of 2000, each manufactured by Hokoku Co., Ltd.), polyester polyol of adipic acid/hexanediol, (for example, HS 2H-351A manufactured by Hokoku Co., Ltd., molecular weight of 3500), and polycaprolactone (for example, PLACCEL 240 with molecular weight of 4000 and PLACCEL 220 with molecular weight of 2000, each manufactured by Daicel Corporation).

Also, specific examples of preferable non-crystalline polyester polyols include polyester polyol of adipic acid/propylene glycol (for example, ADEKA New Ace F7-67 manufactured by ADEKA Corporation, molecular weight of 2000), polyester polyol of sebacic acid/isophthalic acid/hexanediol/neopentyl glycol (for example, HS 2F-305S manufactured by Hokoku Co., Ltd., molecular weight of 3100), polyester polyol of phthalic acid/neopentyl glycol (for example, HS 2F-306P with molecular weight of 3000 and HS 2F-136P with molecular weight of 1000, each manufactured by Hokoku Co., Ltd.), polyester polyol of adipic acid/hexanediol/neopentyl glycol (for example, HS 2F-231AS with molecular weight of 2000 and HS 2F-131A with molecular weight of 1000, each manufactured by Hokoku Co., Ltd.), polyester polyol of sebacic acid/propylene glycol (for example, HS PP-830S manufactured by Hokoku Co., Ltd., molecular weight of 8000), polyester polyol of adipic acid/isophthalic acid/terephthalic acid/neopentyl glycol/ethylene glycol (for example, HS Polyol 1000 manufactured by Hokoku Co., Ltd., molecular weight of 3000), polyester polyol of isophthalic acid/ethylene glycol/neopentyl glycol/hexanediol/propylene glycol (for example, HS 2F-237P manufactured by Hokoku Co., Ltd., molecular weight of 2000), polyester polyol of adipic acid/ethylene glycol/neopentyl glycol/hexanediol (for example, HS 2E-581A manufactured by Hokoku Co., Ltd., molecular weight of 5500), and polyester polyol of adipic acid/isophthalic acid/hexanediol (for example, HS 2H-179A manufactured by Hokoku Co., Ltd., molecular weight of 1750). Specific examples of preferable non-crystalline polyether polyols include polypropylene glycol (for example, P-2000 with molecular weight of 2000, P-700 with molecular weight of 700, and P-400 with molecular weight of 400, each manufactured by ADEKA Corporation) and polytetramethylene ether glycol (for example, PTMG2000 with molecular weight of 2000 and PTMG650 with molecular weight of 650, each manufactured by Mitsubishi Chemical Corporation).

Also, a low-molecular-weight diol may be contained as a constituent component of the urethane pre-polymer, and examples thereof include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,2-propanediol, 1,3-butanediol, neopentyl glycol, diethylene glycol, dipropylene glycol, 3-methyl-1,5-pentanediol, and 2,4-diethyl-1,5-pentanediol.

In the present invention, diphenylmethane diisocyanate (MDI), tolylene diisocyanate (TDI), naphthalene diisocyanate (NDI), hexamethylene diisocyanate (HMDI), pentamethylene diisocyanate (PDI), isophorone diisocyanate (IPDI), and the like, for example, are used in the reaction with a mixture containing the crystalline polyester polyol, non-crystalline polyester polyol, and/or non-crystalline polyether polyol, and/or low-molecular-weight diol (preparation of urethane pre-polymer); however, it is particularly preferable to use MDI. As this MDI, 4,4'-diphenylmethane diisocyanate (4,4'-MDI) or 2,4'-diphenylmethane diisocyanate (2,4'-MDI) represented by the following chemical formula [Formula 2], or a mixture of these may be used. Here, it is more advantageous when the blending ratio of 2,4'-MDI is higher. This is because the NCO group at the 2-position of 2,4'-MDI has a lower reaction speed than the NCO group at the 4'-position and, by this lowness of reactivity, one of the NCO groups preferentially reacts to give a high molecular weight, and a PUR having an optimal viscosity is obtained even when an excessive amount of MDI is not blended so much (that is, the residual monomers can be reduced in amount), resulting in a less amount of emission of the isocyanate gas.

[Chemical formula 2]

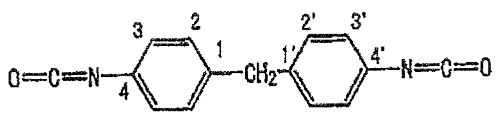

4, 4' -MDI

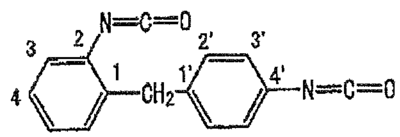

2, 4' -MDI

Here, the urethane pre-polymer in the PUR of the present invention can be produced by adding an excessive amount of MDI to a mixture containing the aforementioned crystalline polyester polyol and non-crystalline polyester polyol and/or non-crystalline polyether polyol, and/or low-molecular-weight diol and mixing and heating a resultant in an inert gas atmosphere (for example, nitrogen gas atmosphere). The reason why the crystalline polyester polyol and non-crystalline polyester polyol and/or non-crystalline polyether polyol, and/or a low-molecular-weight diol are incorporated in combination is for optimizing the application property (melt viscosity) and solidification property (facility of solidification) of the PUR.

As described above, when 2,4'-MDI is blended, the NCO group at the 4'-position preferentially reacts, because the reactivity of the NCO group at the 2-position is low, so that the optimal viscosity is obtained by addition of a small amount without increasing the ratio of the added MDI, and the residual monomers can be reduced in amount; however, the residual monomers cannot be sufficiently reduced in amount by employing this method alone. For this reason, in the present invention, 5 to 20 parts by weight of a surface-modified silica gel, in which an amino group that reacts with the isocyanate monomer is introduced to a surface, is blended with respect to 100 parts by weight of the urethane pre-polymer that is a reaction product produced by the aforementioned reaction. The reason why the amount of the amino-group-containing surface-modified silica gel is limited to the aforementioned range is that, when the amount is smaller than 5 pars by weight, the amount of adsorption of the isocyanate monomers will not be sufficient, and the residual monomers will be large in amount, whereas when the amount is larger than 20 parts by weight, the viscosity of the PUR will be too high.

A preferable amino-group-containing surface-modified silica gel in the present invention is a silica gel to which a residual group of a silane oligomer, which is a hydrolytic product of aminoalkyl(di or tri)alkoxysilane, is bonded. The preferable amino-group-containing surface-modified silica gel can be prepared by allowing a commercially available silica gel and a commercially available amino-group-containing silane coupling agent to react.

Examples of the amino-group-containing silane coupling agent suitable for preparing the amino-group-containing surface-modified silica gel in the present invention include N-(2-aminoethyl)-3-aminopropyltrimethoxysilane, N-2-(aminoethyl)-3-aminopropylmethyldimethoxysilane, 3-aminopropyltrimethoxysilane, and 3-aminopropyltriethoxysilane.

The following [Formula 3] shows one example of surface modification of silica gel in the PUR of the present invention when N-(2-aminoethyl)-3-aminopropyltrimethoxysilane is used as the amino-group-containing silane coupling agent.

[Chemical formula 3]

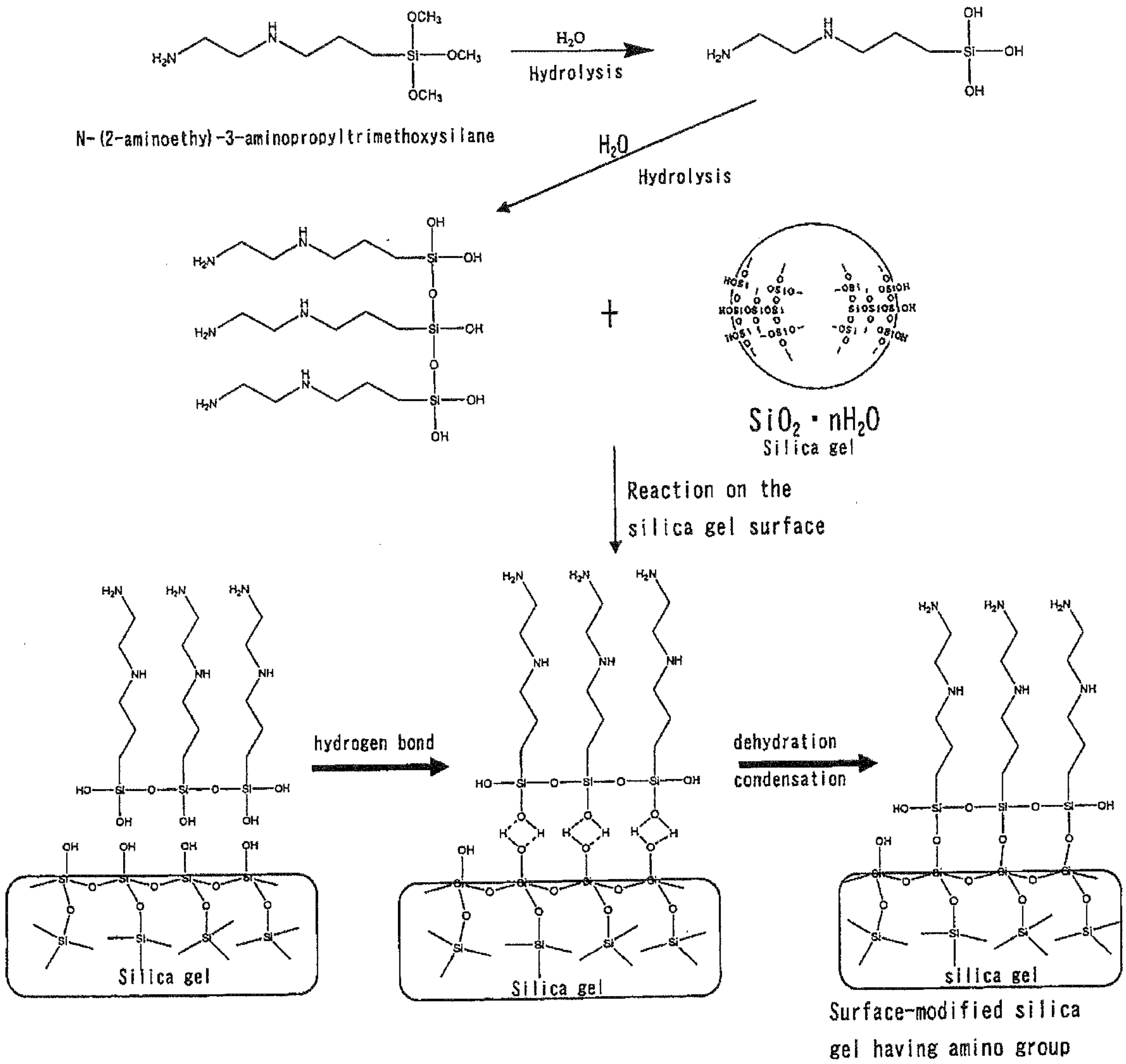


As shown in the above [Formula 3], N-(2-aminoethyl)-3-aminopropyltrimethoxysilane is turned into silanol having a silanol group (Si-OH group) by hydrolysis, and is further turned into a silane oligomer having a siloxane (Si-O-Si) bond

by spontaneous dehydration condensation. Furthermore, the OH group of this silane oligomer and the OH group on the silica gel surface form a hydrogen bond, and further a covalent bond is formed by passing through dehydration condensation, so as to form a surface-modified silica gel having an amino group on the surface.

The silica gel before being subjected to surface modification has numerous pores, and only the isocyanate monomers that can enter the pores react with the substituent (that is, only the monomers having a small molecule size are selectively taken in into the pores of the silica gel) and, as a result, only the isocyanate monomer components in the urethane pre-polymer decrease in amount. The isocyanate monomers that have reacted with the substituent on the silica gel surface are typically irreversible and are not dissociated, so that emission of isocyanate gas is extremely small even when the PUR is heated.

In the present invention, the isocyanate monomer adsorption performance is further more enhanced by introduction of such an amino group onto the silica gel surface, and this can achieve an isocyanate gas concentration of 5 ppb or less, as measured by the solid collection method according to the United States Occupational Safety and Health Administration (OSHA) Method 47.

In addition to the aforementioned urethane pre-polymer and the amino-group-containing surface-modified silica gel, the PUR of the present invention may contain tin octylate, dibutyltin dilaurate, triethylamine, 1,4-diazobicyclo[2,2,2]octane, 2,2'-dimorpholino diethyl ether, or the like as a catalyst, may contain paraffin wax, microcrystalline wax, Fischer-Tropsch wax, or the like as a crystal nucleating agent, and may contain a silicone oil compound type defoaming agent or the like as a defoaming agent.

Next, a method of the present invention for producing the aforementioned PUR will be described.

The step A in the production method of the present invention is a step of preparing a urethane pre-polymer, and includes adding, to a mixture, an MDI in an amount such that an isocyanate group is excessive relative to a hydroxyl group that is present in the mixture, the mixture containing the aforementioned crystalline polyester polyol and non-crystalline polyester polyol and/or non-crystalline polyether polyol, and/or low-molecular-weight diol, and allowing a resultant to react in an inert gas atmosphere (for example, in a nitrogen gas atmosphere). In performing this, it is preferable that the aforementioned mixture is heated to a temperature of about 100 to 120°C; thereafter the pressure is reduced; and stirring is carried out under reduced pressure, so as to dehydrate the raw material before the reaction with MDI.

In the present invention, it is preferable to determine the amount of addition of MDI so that a molar ratio of the isocyanate group and the hydroxyl group in the polyol is NCO/OH = 1.4 to 1.7. The aforementioned ratio is preferably 1.5 to 1.6.

The step B is a step of preparing an amino-group-containing surface-modified silica gel in which a residual group of an aminoalkylsilane oligomer is bonded to a surface of a silica gel, and includes preparing aminoalkyl(di or tri)alkoxysilane (silane coupling agent), dropwise adding this into water and stirring to hydrolyze the aminoalkyl(di or tri)alkoxysilane to generate a silane oligomer, and thereafter adding a silica gel to allow the silane oligomer to react with the silica gel. When the silica gel subjected to the reaction is heated and dried at a temperature of about 100 to 160°C, an amino-group-containing surface-modified silica gel in which a residual group of the aminoalkylsilane oligomer is bonded to a surface of the silica gel is obtained. Thereafter, the dried amino-group-containing surface-modified silica gel is preferably ground and classified by sieving.

The step C in the present invention is a step of adding 5 to 20 parts by weight of the amino-group-containing surface-modified silica gel obtained in the step B to 100 parts by weight of the urethane pre-polymer obtained in the step A and allowing a resultant to react in an inert gas atmosphere (for example, in a nitrogen gas atmosphere). This step is typically carried out under reduced pressure in a reaction tank, and the PUR of the present invention is obtained by stirring for a predetermined period of time.

Hereafter, the present invention will be described in further more detail by way of Examples and Comparative Examples; however, the present invention is not limited to these alone.

EXAMPLES

The raw materials used for preparing the PUR of the Examples 1 to 6 and Comparative Examples 1 to 4 are as follows.

(1) Polyester diols

a) Crystalline polyester polyols

Polyester polyol of dodecanedioic acid/ethylene glycol (molecular weight of 3500, abbreviated as DA/EG3500, ETERNACOLL 3040 manufactured by Ube Industries, Ltd.)

Polyester polyol of dodecanedioic acid/hexanediol (molecular weight of 3500, abbreviated as DA/HD3500, ETERNACOLL 3010 manufactured by Ube Industries, Ltd.)

Polyester polyol of sebacic acid/hexanediol (molecular weight of 3500, abbreviated as SA/HD3500, HS 2H-350S manufactured by Hokoku Co., Ltd.)
Polyester polyol of adipic acid/hexanediol (molecular weight of 3500, abbreviated as AA/HD3500, HS 2H-351A manufactured by Hokoku Co., Ltd.)

b) Non-crystalline polyester polyols

Polyester polyol of adipic acid/propylene glycol (molecular weight of 2000, abbreviated as AA/PG2000, ADEKA New Ace F7-67 manufactured by ADEKA Corporation)
Polyester polyol of sebacic acid/isophthalic acid/hexanediol/ neopentyl glycol (molecular weight of 3100, abbreviated as SA/IPA/HD/NPG3100, HS 2F-305S manufactured by Hokoku Co., Ltd.)
Polyester polyol of phthalic acid/neopentyl glycol (molecular weight of 1000, abbreviated as PA/NPG1000, HS 2F-136P manufactured by Hokoku Co., Ltd.)

(2) Non-crystalline polyether polyols

Polypropylene glycol (molecular weight of 700, abbreviated as PPG700, P-700 manufactured by ADEKA Corporation)
Polypropylene glycol (molecular weight of 400, abbreviated as PPG400, P-400 manufactured by ADEKA Corporation)

(3) Isocyanate monomers

Mixture of 4,4'-diphenylmethane diisocyanate and 2,4'-diphenylmethane diisocyanate (MILLIONATE NM manufactured by Tosoh Corporation)
4,4'-diphenylmethane diisocyanate (MILLIONATE MT manufactured by Tosoh Corporation)

(4) Catalyst
2,2'-dimorpholino diethyl ether (JD DMDEE manufactured by Mitsui Fine Chemicals, Inc.)
(5) Crystal nucleating agent
Paraffin wax (HNP-9 manufactured by Nippon Seiro Co., Ltd.)
(6) Defoaming agent
Silicone oil compound type defoaming agent (KS-66 manufactured by Shin-Etsu Chemical Co., Ltd.)
(7) Silica gel
Silica gel (B-type crushed thru40 manufactured by Fuji Silysia Chemical Ltd.)
(8) Surface modifying agent (amino-group-containing silane coupling agent)
N-(2-aminoethyl)-3-aminopropyltrimethoxysilane (KBM-603 manufactured by Shin-Etsu Chemical Co., Ltd.)

i) Preparation of amino-group-containing surface-modified silica gel (study experiment on addition amount of amino-group-containing silane coupling agent suitable for adsorption of isocyanate monomers)

Silica gel (manufactured by Fuji Silysia Chemical Ltd., one produced by wet method or dry method, having an average particle diameter of 500 μm, pore diameter of 7 nm, specific surface area of 500 $m^2/g$) was prepared, and N-(2-aminoethyl)-3-aminopropyltrimethoxysilane was prepared as an amino-group-containing silane coupling agent.
The theoretical optimal addition amount of the silane coupling agent relative to the silica gel can be calculated by the equation of the Numerical formula 1 disclosed in the Non-Patent Document 1.

[Numerical formula 1]

$$\text{Minimum covering area (m}^2\text{/g) of silane coupling agent} = \frac{6.02 \times 10^{23}\ (\text{/mol}) \times 13 \times 10^{-20}\ (\text{m}^2)}{\text{Molecular weight of silane coupling agent (g/mol)}}$$

$$\text{Theoretical optimal addition amount (g) of silane coupling agent} = \frac{\text{Specific surface area (m}^2\text{/g) of silica gel} \times \text{weight (g) of silica gel}}{\text{Minimum covering area of silane coupling agent (m}^2\text{/g)}}$$

$6.02 \times 10^{23}$ : Avogadro number

$13 \times 10^{-20}$ : Occupied area when one molecule of silane coupling agent is landed on silica gel surface

The theoretical optimal addition amount of the silane coupling agent introduced to the silica gel (that is, the optimal amount of introducing an amino group suitable for attaining maximum adsorption of isocyanate monomers) is determined by the equation of the Numerical formula 1; however, it has been found out that the adsorption amount of the NCO group attains the maximum with an addition amount that is substantially smaller than the theoretical optimal addition amount determined from the equation of the Numerical formula 1, by measuring the actual adsorption amount of the NCO group. The method therefor is as follows.

In preparing an amino-group-containing surface-modified silica gel, first, water was put into a flask, and a silane coupling agent was dropwise added. After the dropwise addition, stirring was carried out for one hour, and thereafter, silica gel was put into this aqueous solution, followed by stirring for about 10 minutes. Thereafter, the silica gel was filtrated and spread over a tray, so as to be dried at 150°C for 2 hours.

An isocyanate compound was actually adsorbed by using the amino-group-containing surface-modified silica gel prepared in this manner, and the adsorption amount thereof was measured, so as to investigate the relationship between the ratio of addition of the silane coupling agent relative to the theoretical optimal addition amount and the NCO group adsorption performance of the amino-group-containing surface-modified silica gel.

MDI was used as the isocyanate compound, and a predetermined amount thereof was dissolved into dry toluene, and a weighed amino-group-containing surface-modified silica gel was put into the solution, followed by stirring for 30 minutes. Thereafter, an excessive amount of di-n-butylamine was put into a filtrate obtained by filtration of the silica gel (including the unreacted MDI) and stirred, followed by leaving the resultant to stand for 15 minutes to complete the reaction with the NCO group. The remaining di-n-butylamine was subjected to back titration with hydrochloric acid, so as to determine the amount of the NCO group adsorbed onto the amino-group-containing surface-modified silica gel. The results are shown in Fig. 1.

From the graph of Fig. 1, the amount of addition of the amino-group-containing silane coupling agent that attained the maximum NCO-group adsorption performance had a value substantially smaller than the theoretical optimal addition amount determined from the Numerical formula 1, and the amount of addition thereof was 15% of the theoretical optimal addition amount determined from the Numerical formula 1. For this reason, in the following experiments, an amino-group-containing surface-modified silica gel was prepared by assuming that the substantial amount of addition of the amino-group-containing silane coupling agent (N-(2-aminoethyl)-3-aminopropyltrimethoxysilane) to the silica gel was 15% of the theoretical optimal addition amount calculated from the Numerical formula 1.

ii) Preparation of surface-modified silica gel (study experiment on particle diameter of amino-group-containing surface-modified silica gel suitable for adsorption of isocyanate monomers)

The amino-group-containing surface-modified silica gel obtained in the above i) was dried and thereafter ground, followed by classification by sieving to those having particle sizes shown in the following Table 1.

The following Table 1 shows the particle diameter of the amino-group-containing surface-modified silica gel and the amount of residual monomers when the blending amount into the urethane pre-polymer prepared by the method of the Example 1 was changed, and those giving a high isocyanate monomer adsorption performance were selected from the experiments.

[Table 1]

Particle size of amino group-containing silica gel and residual monomer (%)

| | | Compounding amount of amino group-containing silica gel to PUR (wt%) | | | | | | | | |
|---|---|---|---|---|---|---|---|---|---|---|
| | | 0 | 3 | 4 | 5 | 6 | 7 | 8 | 9 | 10 |
| Particle size (µm) | <500 | | | | | | 0.53 | | 0.31 | 0.11 |
| | 500-125 | | | | | | 0.18 | | | |
| | 125-75 | | | | | | 0.07 | 0 | | |
| | <75 | | | | 0.09 | 0 | 0 | | | |
| | 75-45 | 2.5 | 0.79 | | 0.03 | | 0 | | | |
| | <63 | | | | 0.05 | | 0 | | | |
| | <45 | | | | 0.11 | 0 | 0 | | | |
| | <25 | | | 0.68 | 0.09 | | | | | |

From the experiment result of Table 1, it has been found out that, according as the particle diameter of the amino-group-containing surface-modified silica gel is smaller, the adsorption performance increases; however, there exists a local maximal point and, when the particle diameter is too small, the adsorption performance decreases.

From this experiment result, the optimal range of the particle diameter of the amino-group-containing surface-modified silica gel is 75 to 45 µm; however, when the particle diameter is limited to this range, the yield will be smaller, so that, in consideration of the production efficiency, those classified by sieving to the particle diameter of 75 µm or less were used as the amino-group-containing surface-modified silica gel to be blended into the urethane pre-polymer in the following Examples.

Schematic description of method for synthesizing PUR

A flask was loaded with the aforementioned polyester polyol or polyether polyol and various additives, and reduced-pressure dehydration was carried out at 110°C for 3 hours. Thereafter, the pressure within the system was returned to an ordinary pressure, and the temperature of the polyol was adjusted to be 90°C. Further, while purging with nitrogen gas, 4,4-MDI alone or a mixture with 2,4-MDI was put. In the state as it was, reaction was carried out at 90°C for 4 hours to construct a urethane pre-polymer, and thereafter, the amino-group-containing surface-modified silica gel was put into this urethane pre-polymer. The pressure within the system was reduced, and stirring was carried out at 120°C for one hour, so as to obtain the targeted PUR.

Example 1: preparation of moisture-curable polyurethane hot-melt adhesive

Crystalline polyester polyol of sebacic acid/hexanediol SA/HD3500, non-crystalline polyester polyol of adipic acid/propylene glycol AA/PG2000, non-crystalline polyester polyol of phthalic acid/neopentyl glycol PA/NPG1000, polypropylene glycol PPG700 which is one kind of a non-crystalline polyether polyol, paraffin wax, a silicone oil compound type defoaming agent serving as a defoaming agent, and 2,2'-dimorpholino diethyl ether serving as a catalyst were mixed in an amount (weight ratio) shown in the following Table 2, and a reaction tank was loaded with the obtained mixture, followed by heating to 110°C. After the heating, the pressure was reduced to 5 Torr, and stirring was carried out under reduced pressure for 3 hours to perform dehydration of the raw materials.

The pressure in the reaction tank was returned to atmospheric pressure with nitrogen gas and, after 4,4'-MDI was added, reaction was carried out at 90°C for 4 hours to prepare a urethane pre-polymer. In this process, the molar ratio of the isocyanate group to the hydroxyl group was set to be NCO/OH = 1.55.

Thereafter, the reaction tank was heated to 120°C, and the amino-group-containing surface-modified silica gel (having a particle diameter of 75 µm or less) used in the above ii) was mixed with the urethane pre-polymer. Thereafter, the pressure was reduced to 5 Torr, and stirring was carried out under reduced pressure for one hour. The pressure inside the reaction tank was returned to atmospheric pressure with nitrogen gas, so as to obtain a targeted moisture-curable polyurethane hot-melt adhesive. Details of the composition of the Example 1 are shown in the following Table 2.

Examples 2 to 6

A mixture of 4,4'-MDI and 2,4'-MDI was used as the MDI, and adhesive compositions with varied blending were prepared by a method similar to that of the Example 1. Details of the compositions of the Examples 2 to 6 are shown in the following Table 2.

Comparative Example 1

The adhesive composition in the Comparative Example 1 was set to be a commercially available moisture-curable polyurethane hot-melt adhesive (HMR-115 manufactured by Horizon International Inc.).

Comparative Examples 2 and 3

An adhesive composition that does not contain an amino-group-containing surface-modified silica gel was obtained in the same manner as in the Example 1. Details of the compositions of the Comparative Examples 2 and 3 are shown in the following Table 2.

Comparative Example 4

An adhesive composition containing a silica gel (having a particle diameter of 75 μm or less) that had not been subjected to surface modification was obtained in the same manner as in the Example 1. Details of the composition of the Comparative Example 4 are shown in the following Table 2.

Here, Table 2 together shows the evaluation results on the adhesive compositions of the above Examples 1 to 6 and the Comparative Examples 1 to 4, and the evaluation method for each item described in this Table is as follows.

[Evaluation method]

(1) Measurement of melt viscosity of PUR

A sample melted at 120°C was subjected to measurement of melt viscosity with use of a rotation viscometer (D·II+ manufactured by Brookfield Co., Ltd.) at a spindle rotation number of 10 rpm.

(2) Measurement of monomer amount in PUR by gel permeation chromatography (GPC)

The synthesized PUR was dissolved into tetrahydrofuran, and measurement was carried out by GPC, so as to confirm the peak of the monomer.

(3) Measurement of amount of emission of isocyanate gas emitted from heated and melted PUR

Into a 500 ml beaker, 200 g of the prepared PUR was put and stirred at a rotation number of 250 rpm while heating to 120°C. The isocyanate gas emitted at that time was passed through an isocyanate collection filter coated with 1-(2-pyridyl)piperazine (for example, ORBO80 manufactured by Sigma Aldrich Co. LLC.) and sucked at a flow rate of 1 L/min. for 30 minutes with use of a suction pump. Thereafter, the components collected on the filter were extracted and analyzed by high-performance liquid chromatography (HPLC).

Also, with use of a commercially available fully automatic 4-clamp perfect bookbinding machine (BQ-470 manufactured by Horizon International Inc.), 700 g of the PUR was put into an application apparatus, and the isocyanate gas emitted while heating at 120°C and rotating a roll was collected in a similar manner and analyzed.

(4) Measurement of elastic modulus and upper yield point stress

In order to provide a good spreading property of the bound books, a suitable softness of the PUR after the curing is needed, so that evaluation was made by the elastic modulus and the upper yield point stress of the PUR film after curing.

At this time, measurement was made in accordance with the standard of JIS K6251 (method of tensile test of vulcanized rubber).

Each composition was formed into a sheet having a 0.5 mm thickness and left to stand for one week or more. Thereafter, the composition was stamped out with use of a dumbbell-shaped No. 2 type to prepare a test piece. This test piece for measurement was mounted on a fully automatic rubber tensile testing machine (AGS-10kNG manufactured

by Shimadzu Corporation), and a tensile test was carried out under conditions with a tensile speed of 100 mm/minute so as to measure the stress and the elongation amount until the test piece underwent fracture. The elastic modulus and the upper yield point stress were calculated from that.

(5) Measurement of crystallization temperature

As to a hot-melt for bookbinding, problems such as deformation of a book are generated unless the solidification property after application with a bookbinding machine is early, so that a suitable solidification time is needed. Accordingly, the solidification property after application of the PUR was evaluated by the crystallization temperature of the PUR.

The crystallization temperature of each resin was measured with use of a differential scanning thermoanalyzer (DSC·60 manufactured by Shimadzu Corporation). The measurement was carried out by using a temperature profile of heating from 25°C to 150°C at a heating rate of 10°C/minute and subsequently cooling down to -20°C at a cooling rate of -10°C/minute.

(6) Measurement of bookbinding strength

By using a fully automatic 4-clamp perfect bookbinding machine (BQ-470 manufactured by Horizon International Inc.) and using a coated paper of A4 size (duodecimo ream weight of 73 kg) as main body paper sheets, a bound book having a 10 mm thickness was fabricated. The thickness of the adhesive of the bound book was set to be about 0.3 mm. The melting temperature of the PUR at the time of bookbinding was set to be 120°C.

Measurement of the bookbinding strength of the bound book was carried out with use of a page pull tester (TE-4001 manufactured by Tester Sangyo Co., Ltd.). The method of measuring the bookbinding strength by the page pull tester was as follows. The bound book was set in the page pull tester, and the paper sheet serving as an object of strength measurement was wound and fixed around a chuck portion; the paper sheet was vertically pulled up, and the load at the time when the paper sheet being measured was drawn out from the bound book was measured with use of a pull gauge linked to the chuck portion; and the bookbinding strength per one page was calculated from that. The unit of the bookbinding strength is kg/page.

With respect to one bound book, measurement of the bookbinding strength was carried out with respect to a sum of three paper sheets at around the center and at around a 1/4 distance before and after the center. With respect to one sample, the strengths of three bound books were measured, and an average value of these was determined as the bookbinding strength of the sample.

The measurement of the bookbinding strength was carried out when 168 hours passed after the bookbinding.

(7) Tensile shear adhesive strength test

By using an aluminum plate (25 × 100 mm, thickness of 1 mm) and an acrylic plate (25 × 100 mm, thickness of 2 mm) as substrates, a test piece for a tensile shear adhesive strength test according to JIS K6850 was fabricated. The melting temperature of the PUR at the time of preparation of the test piece was set to be 120°C.

After preparation, the test piece was left to stand for one week or more, and thereafter the test piece for measurement was mounted on a fully automatic rubber tensile testing machine (AGS-10kNG manufactured by Shimadzu Corporation) and pulled under conditions with a tensile speed of 10 mm/minute so as to measure the maximum load when the test piece underwent fracture. The strength was calculated from that.

Also, breakage mode of the test piece when the test was carried out was recorded. The case in which the substrate and the adhesive were peeled off from each other at the interface was evaluated as interface peeling; the case in which the adhesive underwent aggregation breakage was evaluated as aggregation breakage; and the case in which the substrate was broken was evaluated as substrate breakage.

[Table 2]

| | Example 1 | Example 2 | Example 3 | Example 4 | Example 5 | Example 6 | Comp. Ex. 1 HMR-115 | Comp. Ex. 2 | Comp. Ex. 3 | Comp. Ex. 4 |
|---|---|---|---|---|---|---|---|---|---|---|
| DA/EG3500 | | | | | | 5 | | | | |
| DA/HB3500 | | | | | | 20 | | | | |
| SA/HD3500 | 35 | 35 | 35 | 35 | 40 | | | 35 | 35 | 35 |
| AA/HD3500 | | | | | | 30 | | | | |
| AA/PG2000 | 30 | 30 | 20 | 30 | 15 | | | 30 | 30 | 30 |
| SA/IPA/HD/NPG3100 | | | | | 20 | | | | | |
| PA/NPG1000 | 10 | 10 | 10 | 10 | | | | 10 | 10 | 10 |
| PPG700 | 25 | 25 | 35 | 15 | | 45 | | 25 | 25 | 25 |
| PPG400 | | | | 10 | 25 | | | | | |
| Paraffin wax (wt%) | 0.2 | 0.2 | 0.2 | 0.2 | 0.2 | 0.2 | | 0.2 | 0.2 | 0.2 |
| Defoamer (wt%) | 0.05 | 0.05 | 0.05 | 0.05 | 0.05 | 0.05 | | 0.05 | 0.05 | 0.05 |
| Catalyst (wt%) | 0.05 | 0.05 | 0.05 | 0.05 | 0.05 | 0.05 | | 0.05 | 0.05 | 0.05 |
| MDI isomer ratio 2.4' /4.4' | 0/100 | 30/70 | 50/50 | 50/50 | 50/50 | 50/50 | | 0/100 | 50/50 | 50/50 |
| NCO/OH | 1.55 | 1.55 | 1.55 | 1.55 | 1.55 | 1.6 | | 1.55 | 1.55 | 1.55 |
| Silica gel (wt%) | - | - | - | - | - | - | - | - | - | 5.5 |
| Surface-modified silica gel (wt%) | 5.5 | 5.5 | 5.5 | 5.5 | 5.5 | 5.5 | - | - | - | - |
| Evaluation results | | | | | | | | | | |
| Melt viscosity (mPas 120°C) | 6650 | 5800 | 3750 | 5725 | 4375 | 3600 | 5750 | 3350 | 2275 | 6600 |
| MDI monomer (% GPC) | <0. 1 | <0.1 | <0.1 | <0. 1 | <0.1 | <0.1 | 4.82 | 3.05 | 2.53 | 0.21 |
| MDI gas (ppb 120°C) 200g Measured in beaker | 0.5 | 2.2 | 0.1 | 1.0 | 1.8 | 3.8 | 31.0 | 30. 3 | 60.7 | 8.9 |

(continued)

| | Example 1 | Example 2 | Example 3 | Example 4 | Example 5 | Example 6 | Comp. Ex. 1 HMR-115 | Comp. Ex. 2 | Comp. Ex. 3 | Comp. Ex. 4 |
|---|---|---|---|---|---|---|---|---|---|---|
| MDI gas (ppb 120°C) 700g Coating device | 0.4 | 2. 1 | 1.7 | 0.4 | 4. 2 | 3.2 | 40.0 | 31 | 59.9 | 6.4 |
| Modulus of elasticity (MPa) | 38.0 | 36.0 | 80.9 | 64.0 | 96.4 | 146.8 | 107 | 44.4 | 68. 1 | 50.3 |
| Upper yield point stress (MPa) | 4.05 | 3.84 | 5.9 | 5.2 | 7. 63 | 8.08 | 5.85 | 4.12 | 5.21 | 4.85 |
| Crystallization temperature (°C) | 31.7 | 32.7 | 33.9 | 31.8 | 28.3 | 32.6 | 33.5 | 31.5 | 33.0 | 33.0 |
| Bookbinding strength (kg/page) | 27.5 | 24.4 | 26. 8 | 31.1 | 31.3 | 32.8 | 25.6 | 25. 3 | 31.9 | 28.4 |
| Tensile shear adhesion test | | | | | | | | | | |
| Aluminium ($N/mm^2$) | 2.05 Aggregation breakage | 1.56 Aggregation breakage | 1. 20 Aggregation breakage | 2.08 Aggregation breakage | 1.28 Aggregation breakage | 1.48 Aggregation breakage | 1.53 Aggregation breakage | 1.92 Aggregation breakage | 1.24 Aggregation breakage | 1.54 Aggregation breakage |
| PMMA ($N/mm^2$) | 4.19 Aggregation breakage | 3.67 Aggregation breakage | 5.26 Substrate breakage | 3.97 Substrate breakage | 6.21 Substrate breakage | 3.63 Substrate breakage | 4.10 Substrate breakage | 4.28 Substrate breakage | 3.89 Substrate breakage | 3.16 Aggregation breakage |

[Evaluation results of Examples and Comparative Examples ]

From the evaluation results of the above Table 2, the Comparative Example 1 is directed to a commercially available PUR (HMR-115 manufactured by Horizon International Inc.), where the residual monomers are large in amount, and the amount of emission of isocyanate gas is large.

Also, in the cases such as the Comparative Examples 2 and 3 in which the amino-group-containing surface-modified silica gel was not blended, the MDI monomers remained in a large amount, and the amount of emission of isocyanate gas was large. The Comparative Example 3 is directed to a PUR synthesized with a mixture of 4,4'-MDI and 2,4'-MDI, and this PUR results in a large amount of residual monomers, so that the amount of emission of the MDI gas is also large.

The Comparative Example 4 is directed to a PUR blended with a silica gel that had not been subjected to surface modification. In the case of this PUR as well, the monomers could not be sufficiently adsorbed, and the MDI monomers remained in a ratio of 0.21%, and also the amount of gas emission exceeded 5 ppb.

In contrast, as will be understood from the results of Table 2, in the cases of the PUR of the present invention (Examples 1 to 6), the amount of residual MDI monomers was 0.1% or less in all of the Examples, and further, the results of gas measurement on the beaker and the application apparatus were all 5 ppb or less. Also, from the results of the bookbinding strength test and the tensile shear adhesive strength test, the PUR of the present invention was confirmed to have a sufficient adhesive force as an adhesive for bookbinding.

INDUSTRIAL APPLICABILITY

The PUR of the present invention results in an extremely small amount of emission of hazardous isocyanate gas and achieves an isocyanate gas concentration of 5 ppb or less, as measured by the solid collection method according to the United States OSHA Method 47. Accordingly, by using this, the bonding work can be safely carried out, and also the costs for introducing equipment such as a gas exhaustion apparatus can be reduced.

Also, the PUR of the present invention is particularly suitable for use as a hot-melt adhesive for bookbinding, and has excellent spreading property, solidification property, and bookbinding strength.

## Claims

1. A moisture-curable polyurethane hot-melt adhesive in which 5 to 20 parts by weight of a surface-modified silica gel containing an amino group is added to 100 parts by weight of a urethane pre-polymer which is a product obtained from a reaction between an excessive amount of diphenylmethane diisocyanate and a mixture containing a crystalline polyester polyol and a non-crystalline polyester polyol and/or a non-crystalline polyether polyol.

2. The moisture-curable polyurethane hot-melt adhesive according to claim 1, wherein the surface-modified silica gel is a silica gel to which a residual group of a silane oligomer, which is a hydrolytic product of aminoalkyl(di or tri)alkoxysilane, is bonded.

3. The moisture-curable polyurethane hot-melt adhesive according to claim 2, wherein the aminoalkyl(di or tri)alkoxysilane is selected from the group consisting of N-(2-aminoethyl)-3-aminopropyltrimethoxysilane, N-2-(aminoethyl)-3-aminopropylmethyldimethoxysilane, 3-aminopropyltrimethoxysilane, and 3-aminopropyltriethoxysilane.

4. The moisture-curable polyurethane hot-melt adhesive according to any one of claims 1 to 3, wherein the crystalline polyester polyol is selected from the group consisting of polyester polyol of dodecanedioic acid/ethylene glycol, polyester polyol of dodecanedioic acid/hexanediol, polyester polyol of sebacic acid/hexanediol, polyester polyol of adipic acid/hexanediol, and polycaprolactone; the non-crystalline polyester polyol is selected from the group consisting of polyester polyol of adipic acid/propylene glycol, polyester polyol of sebacic acid/isophthalic acid/hexanediol/neopentyl glycol, polyester polyol of phthalic acid/neopentyl glycol, polyester polyol of adipic acid/hexanediol/neopentyl glycol, polyester polyol of sebacic acid/propylene glycol, polyester polyol of adipic acid/isophthalic acid/terephthalic acid/neopentyl glycol/ethylene glycol, polyester polyol of isophthalic acid/ethylene glycol/neopentyl glycol/hexanediol/propylene glycol, polyester polyol of adipic acid/ethylene glycol/neopentyl glycol/hexanediol, and polyester polyol of adipic acid/isophthalic acid/hexanediol; and the non-crystalline polyether polyol is polypropylene glycol and/or polytetramethylene ether glycol.

5. A method for producing a moisture-curable polyurethane hot-melt adhesive, comprising the following steps A to C:

a step A of adding, to a mixture, diphenylmethane diisocyanate in an amount such that an isocyanate group is excessive relative to a hydroxyl group that is present in the mixture, the mixture containing a crystalline polyester polyol and a non-crystalline polyester polyol and/or a non-crystalline polyether polyol, and allowing a resultant to react in an inert gas atmosphere, so as to prepare a urethane pre-polymer;
a step B of preparing aminoalkyl(di or tri)alkoxysilane, hydrolyzing the aminoalkyl(di or tri)alkoxysilane to generate a silane oligomer, and thereafter allowing the silane oligomer to react with a silica gel, so as to prepare an amino-group-containing surface-modified silica gel in which a residual group of the silane oligomer is bonded to a surface of the silica gel; and
a step C of adding 5 to 20 parts by weight of the amino-group-containing surface-modified silica gel obtained in the step B to 100 parts by weight of the urethane pre-polymer obtained in the step A and allowing a resultant to react in an inert gas atmosphere.

**6.** The method for producing a moisture-curable polyurethane hot-melt adhesive according to claim 5, wherein a molar ratio of the isocyanate group and the hydroxyl group in the step A is NCO/OH = 1.4 to 1.7.

[Fig. 1]

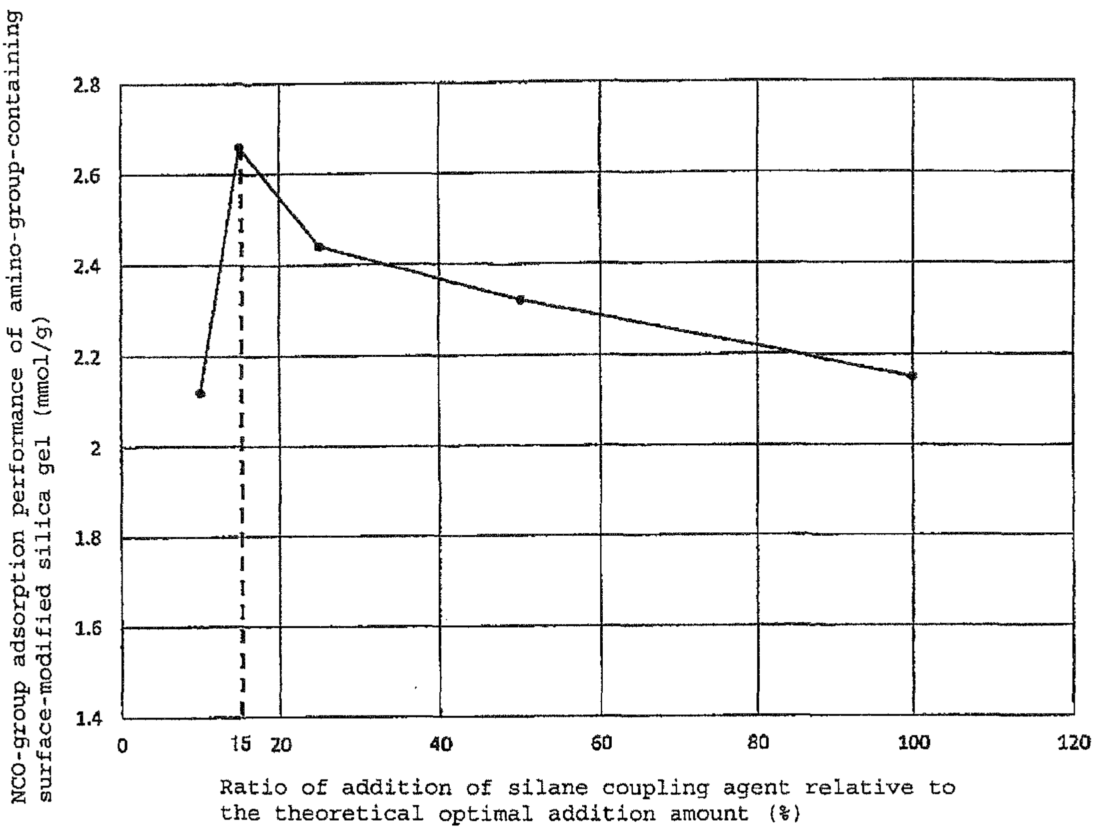
NCO-group adsorption performance of amino-group-containing surface-modified silica gel (mmol/g)
2.8
2.6
2.4
2.2
2
1.8
1.6
1.4
0
15
20
40
60
80
100
120
Ratio of addition of silane coupling agent relative to the theoretical optimal addition amount (%)

## INTERNATIONAL SEARCH REPORT

International application No.
PCT/JP2018/017744

A. CLASSIFICATION OF SUBJECT MATTER
Int. Cl. C09J175/06(2006.01)i, C08G18/10(2006.01)i, C08G18/40(2006.01)i, C08G18/42(2006.01)i, C09C3/12(2006.01)i, C09J11/04(2006.01)i, C09J175/08(2006.01)i
According to International Patent Classification (IPC) or to both national classification and IPC

B. FIELDS SEARCHED
Minimum documentation searched (classification system followed by classification symbols)
Int. Cl. C09J1/00-201/10, C08K3/00-13/08, C08L1/00-101/14, A61L9/00-9/22

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-506187 A (HENKEL KOMMANDITGESELLSCHAFT AUF AKTIEN) 23 May 2000, claims, page 15, examples & AR 0005948 A1 & AT 231526 T & AU 1790597 A & DK 08882081 T3 & EP 08882081 A1 & ES 2191167 T3 & PT 882081 E & US 6316573 B1 & WO 97/31046 A1 & DE 19607036 A1 & CA 2247023 A1 & ZA 9701468 B | 1-6 |
| A | JP 2005-320513 A (TOYO SEIKAN KAISHA, LTD.) 17 November 2005, paragraphs [0034]-[0036] & AT 461969 T & AU 2004255626 A1 & EP 1672019 A1 & US 2006/211811 A1 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27.07.2018 | 07.08.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/017744

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-506018 A (EVONIK DEGUSSA GMBH) 25 February 2010, claims, paragraphs [0021]-[0023], [0044] & CN 101522819 A & DE 102006048509 A1 & EP 2074179 A1 & TW 200831410 A & US 2009/292097 A1 & WO 2008/043634 A1 | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016121214 A


### Non-patent literature cited in the description


- **SANUKI SUMIKO ; MOTOYOSHI FUMITAKE ; NAGAOKA SHIGERU ; MAJIMA HIROSHI.** *The Journal of the Surface Finishing Society of Japan,* 1999, vol. 50 (1), 84